# EUROPEAN PATENT SPECIFICATION

(11) **EP 2 974 688 B1**
(45) Date of publication and mention of the grant of the patent: **29.05.2019**
(21) Application number: 15382371.1
(22) Date of filing: 17.07.2015
(51) Int. Cl.: A61C 8/00, A61C 13/107

(54) **SINGLE-PIECE DENTAL IMPLANT FOR DIRECT CONNECTION WITH THE PROSTHESIS**
EINSTÜCKIGES DENTALIMPLANTAT FÜR DIREKTE VERBINDUNG MIT DER PROTHESE
IMPLANT DENTAIRE MONOBLOC POUR CONNEXION DIRECTE AVEC LA PROTHÈSE

(30) Priority: 18.07.2014 ES 201431084
(43) Date of publication of application: 20.01.2016
(73) Proprietor: Ridao Dalmau, Marcela, 08186 Lliça d'Amunt Barcelona (ES)
(72) Inventor: Ridao Dalmau, Marcela, 08186 Lliça d'Amunt Barcelona (ES)
(74) Representative: Durán-Corretjer, S.L.P.

(56) References cited:
- WO-A2-2004/014247
- CN-U- 203 388 954
- US-A1- 2007 111 163
- US-A1- 2014 087 331

## Description

The present invention relates to an endo-osseous dental implant formed by a single piece having a platform for joining directly to the dental prosthesis.

A document in the art is exemplified by US 2007/111163 A1. Currently, dental implants usually comprise a body having an exterior screw capable of being incorporated into the maxillary bone which has a housing in its upper portion that receives another element or pillar on to which the dental prosthesis is placed, with the implant and the pillar being joined together by means of a retaining screw. This arrangement, while making it possible to perform the surgical implantation intervention on the patient, presents a certain degree of complication and requires rather a long time for the replacement dental piece to be incorporated into the patient.

To obtain a simpler and more rapid implantation, the Spanish patent application document ES2288436A1 describes an implant formed by a single piece having two portions that form a single solid body, separated by a flange and a polygonal prismatic section, the first portion being a conical self-tapping core that makes it possible to use surgical drill burrs of smaller diameter and the second portion being a troncoconical section intended to receive the temporary prosthetic part in the first surgical phase, which is joined on to the cone, preferably by means of cementing or screwing. The prosthesis is placed directly on this implant, being fixed by means of a retaining screw, with no intermediate pillar.

Although this is a valid solution, it has the disadvantage that the troncoconical platform for joining to the prosthesis protrudes from the gum once the implant has been placed in the bone. The excessive protrusion imposes restrictions with regard to the temporary piece to be fitted, as well as to the final piece. Moreover, it is preferable for there to be as little protrusion as possible in order to avoid accidental stresses on the implant during the phase of osteointegration. These stresses may be produced, for example, during mastication.

An even more important problem is that it is necessary to maintain parallelism of the implant with respect to the dental structure during its placement in the bone. If there is any disparallelism, the troncoconical platform will be left inclined. This produces various problems. The prosthesis may not fit suitably if it is not capable of absorbing disparallelism. Moreover, the stresses on the implant increase, thus increasing the possibility of breakage.

In addition, when there is a disparallelism it is difficult to uninstall the prosthesis, with this operation requiring excessive force.

An aim of the present invention is to disclose a single-piece implant that is capable of receiving the prosthesis directly and solves the problem of disparallelism cited above, providing a single-piece implant that is capable of absorbing any possible disparallelisms of the implant in its location in the bone. A further aim of the present invention is to describe a single-piece implant that protrudes less from the gum than the implants of the known type.

This is achieved by an implant according to independent claim 1 and a dental prosthesis assembly according to claim 5. Preferred embodiments are disclosed in the subclaims.

Specifically, the present invention comprises a dental implant of the type formed by a single body, having an implantation section intended for introduction into the maxillary bone and provided with a self-tapping screw, and a receiving section that comprises a troncoconical surface intended to directly receive a temporary or permanent dental prosthesis, the said implant also having an axial orifice with a thread for receiving a retaining screw, as well as a polygonal prismatic section intended for the tightening of the implant for its implantation in the bone, characterised in that the conical section is immediately adjacent to the implantation section, without the intermediation of the polygonal prismatic section. This is because the applicant has proven that the cylindrical polygonal section situated between the main body and the cone hinders, and even prevents, the absorption by the whole structure of any disparallelism in the location of the implant. However, the receiving cone of the prosthesis is indeed effective at absorbing disparallelisms when there is no straight cylindrical or prismatic surface in the first area of transition between the main body and the conical surface.

A straight prismatic section in the base of the receiving section of the prosthesis forms a negative angle when there is a disparallelism (i.e. the implant has seated with a certain degree of inclination), and this causes or exacerbates the problems mentioned earlier.

The present invention is therefore based on the immediately adjacent location of the implantation section and the prosthesis receiving section, and on the use of the conical surface in the area of transition between the main body of the implant and the prosthesis, with the aim of absorbing disparallelism. This requires the polygonal prismatic section (necessary for the introduction of the implant) to be moved to a different area of the implant.

Generally possible are two main provisions for the conical section: one internal and one external. The internal provision, which is not part of the claimed invention, allows the polygonal prismatic section to be located behind the conical section. The external distribution is undecided with regard to where the polygonal prismatic section for tightening the implant is to be located. Since the main self-tapping section is intended to be introduced into the bone and/or gum, it is not possible to arrange the said tightening section there. One possibility is to locate the polygonal tightening section in an elevated and intermediate position on the external conical surface; however, this option slightly reduces the capacity for absorbing disparallelism. Another option is to locate it in the receiving orifice of the fixing screw, which is not part of the claimed invention. On the other hand, both of these options reduce the diameter of the polygonal surface, making tightening more difficult.

Consequently, the present invention provides a way of integrating the polygonal prismatic surface into the conical surface in such a way that no negative angle effect is produced in the event of any disparallelism. To this end, the polygonal prismatic surface is situated in a section of the conical surface, having a diameter equal to or smaller than the minimum diameter of the conical section in which it is situated.

The invention also has the additional advantage of reducing the height of the implant and therefore the length that protrudes from the gum.

In the examples with an interior conical surface, the said conical section preferably takes the form of a recess of decreasing diameter that is accessed through the said orifice, the screw thread being accessible for receiving the retaining screw through the conical surface.

On the other hand, the cone angle and the lesser height of the internal conical surface with respect to the previously known external cone makes it possible to absorb any disparallelism of the implant produced during surgery.

The cone angle may be variable.

In this way, the implant piece protrudes above the gum to a lesser height than that previously known. Synergically, when the cone and the retaining screw are consecutively put in place, it is easier to perform an adjustment with a smaller cone angle, making it unnecessary (inadvisable) to increase the diameter of the self-tapping screw, maintaining one of the implant's advantages of being a single solid piece compared with implants that comprise multiple pieces and/or require an intermediate piece or pillar for their connection with the prosthesis.

In an example, a polyhedral surface is situated between the conical surface and the screw thread to receive the retaining screw.

In an example, the orifice providing access to the conical section is situated on an intermediate flange section between the orifice and the self-tapping section.

The present invention makes it possible to dispense with intermediate additions between the implant and the corresponding prosthesis, thus eliminating implantation phases (elimination of the so-called "two-phase prosthesis"), and the implant-prosthesis bond is strengthened.

In addition, the present invention reduces the stresses and possible complications that are produced during the phase of osteointegration of the implant, in which the patient has only a temporary prosthesis and any stresses on the implant must be avoided.

The present invention also comprises a dental prosthesis assembly according to claim 5.

For a clearer understanding, drawings of two embodiments of the implant forming the subject of the present invention are attached by way of non-limitative explanatory example.
Figure 1 shows a front elevation view of an implant which does not form part of the claimed invention.
Figure 2 shows a plan view of the implant of Figure 1, showing the orifice that provides access to the conical surface and the screw thread of the retaining screw.
Figure 3 shows a cross-section view in the plane III-III of the view of Figure 1, showing the interior of the implant.
Figure 4 shows a cross-section view of an implant assembly which does not form part of the claimed invention, comprising an implant, a prosthesis and a retaining screw, already implanted in the jaw of a patient.
Figure 5 shows a front elevation view of an embodiment of an implant according to the present invention.
Figure 6 shows a plan view of the implant of Figure 5.
Figure 7 shows a partially cross-section front elevation view of the implant of Figure 5.
Figure 8 shows schematically an example of application of the implant of Figure 5.
Figure 9 shows a second embodiment of an implant according to the present invention.

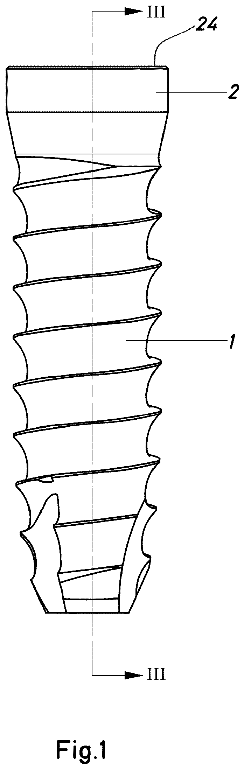

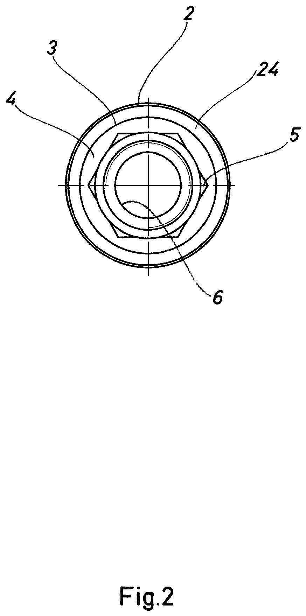

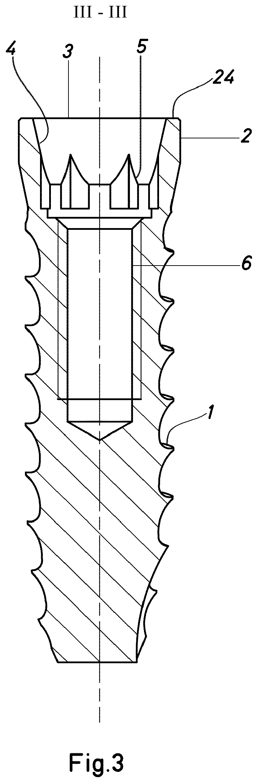

Figures 1 to 3 show an implant formed by a single solid body that comprises, externally, a self-tapping section - 1- with an external osteointegration screw thread and an upper flange section -2-. In the upper portion of the flange there is an orifice -3- that gives direct access to a conical surface -4- of decreasing diameter. The conical surface ends in a polyhedral section -5- whose function, inter alia, is to prevent rotational movements of the prosthesis that will subsequently be introduced into the orifice -3- and will be seated in the conical surface -4-. Behind the polyhedral surface -5- is the screw thread -6-for receiving a retaining screw.

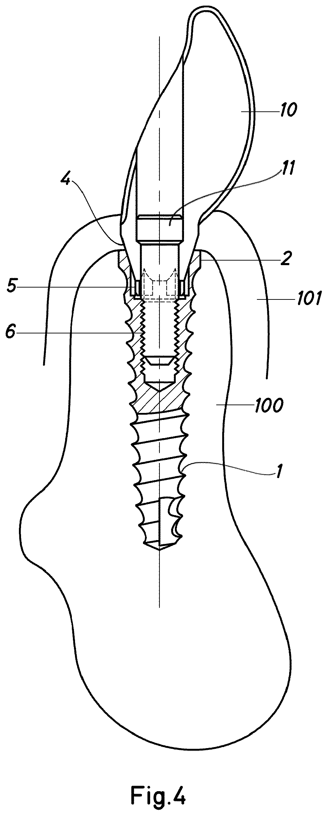

Figure 4 shows an implant assembly once implanted in the patient. It can be seen that the implant is introduced into the bone -100- and that there is practically no protrusion from the gum - 101-. The prosthesis -10- is seated in the interior conical surface -4- of the implant. The recesses of the polyhedral surface are used for driving during the fixing of the implant in the bone and also for securing, and prevent any micro-movement of the tooth.

Although not shown in this case, the prosthesis could be created with projections that mate with the recesses of the polyhedral surface -5- in order to ensure that there is no rotation of the prosthesis -10- in the event that the retaining screw -11- works loose.

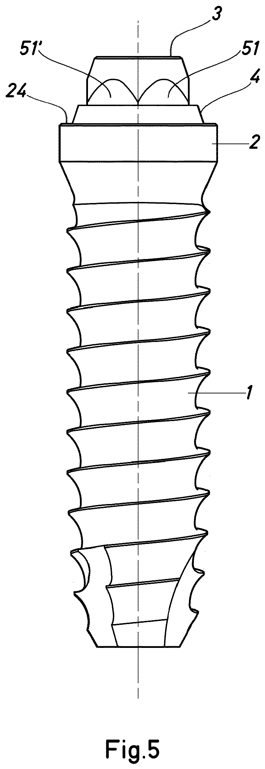

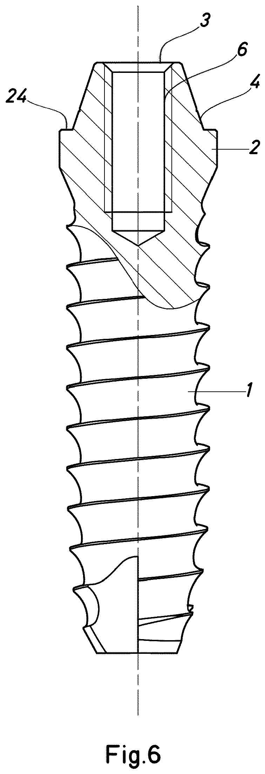

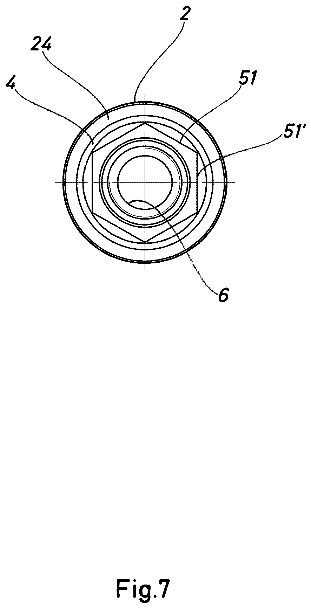

Figures 5 to 7 show an implant according to the present invention, with an exterior connecting platform (conical surface). Elements that are identical or equivalent to those shown in the previous Figures have been identified with the same numbers and will not be described in detail.

The implant of Figures 5 to 7 is formed by a single solid body that comprises, externally, a self-tapping section - 1- with an external osteointegration screw thread and an upper flange section. In the upper flange section -2- lies the conical surface -4-, with no intermediate cylindrical or prismatic elements between the two elements. The conical surface terminates in an orifice -3- in which is located the screw thread -6- of the retaining screw.

As can be seen, the polygonal prismatic surface -5- in this case is integrated into a section of the conical surface. The polygonal prismatic surface -5- (in this case a hexagonal prismatic surface) has a diameter equal to the minimum diameter of the conical surface in which it is located. In this way, there is no interference with the disparallelism absorption function of the cone.

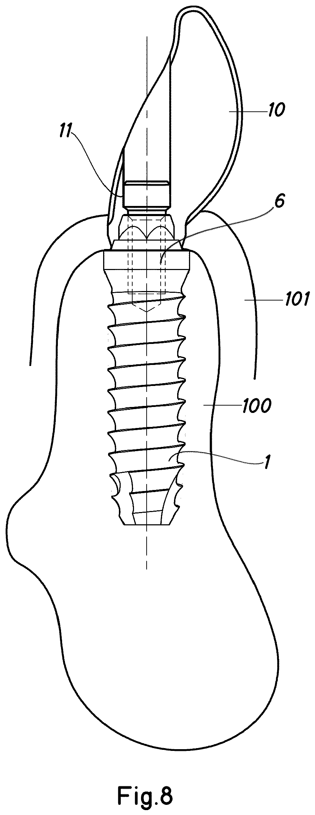

Figure 8 shows an application of the implant of Figures 5 to 7. The application is similar to that shown in Figure 4, the elements that are identical or equivalent are identified with the same numbers and will therefore not be described in detail.

With regard to the cone angle, this may be variable, with the optimal angle being selected according to the dimensions of the implant.

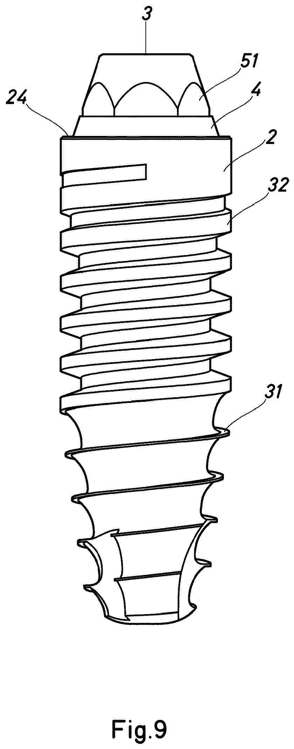

Figure 9 shows another implementation of the single-piece implant according to the present invention. The implant shown is a variant of the one shown in Figures 5 to 7. Consequently, elements that are identical or equivalent to those of the variant in Figures 5 to 7 have been identified with the same numbers and will not be described in detail. The implementation of Figure 9 has innovative characteristics worthy of mention. In particular, in this implementation the screw for fixing in the maxillary bone consists of two parts with different screw designs. In the distal or lower section -31- (i.e. the section most distant from the head intended to receive the prosthesis) the screw has a cutting thread and extends in the form of a progressive conical helix to facilitate the entry and fixing of the implant in the patient's maxillary bone. In the proximal or upper section -32- (i.e. the section closest to the area intended to receive the prosthesis) the screw has a non-cutting trapezoidal thread and extends in the form of a cylindrical spiral. The aim of the provision of two screw sections -31-, -32- is, on the one hand, to facilitate insertion by means of the screw of the distal section -31- and, on the other hand, by means of the proximal section -32-, to give primary stability and allow the clinical shortening of the time required for loading the future prosthetic rehabilitation. In addition to this advantage, the design of the trapezoidal screw allows better withstanding of the lateral loads and masticatory pressure of the patient's posterior dental structure. Of course, this type of screw with two differentiated sections can be applied to other implementations of the invention.

Although the invention has been described with respect to examples of preferred implementations, these must not be regarded as limitative in relation to the invention, which will be defined by the broadest interpretation of the following claims.

## Claims

1. Dental implant of the type formed by a single solid body, having an implantation section intended for introduction into the maxillary bone and provided with a self-tapping screw, and a receiving section that comprises a troncoconical surface (4) intended to receive directly a temporary or permanent dental prosthesis (10), the troncoconical surface being situated in a troncoconical portion above the implantation section, the said implant also having an axial orifice (3) with a thread (6) for receiving a retaining screw (11), the axial orifice being situated in the upper part of said troncoconical portion as well as a polygonal prismatic surface (51') intended for the tightening of the implant for its implantation in the bone, **characterised in that** the troncoconical surface is immediately adjacent to the implantation section, without the intermediation of the polygonal prismatic surface and **in that** the polygonal prismatic surface is integrated into a section of the troncoconical surface, the said polygonal prismatic surface having a diameter equal to or less than the minimum diameter of the cone on the said section of the troncoconical surface.

2. Implant, according to claim 1, **characterised in that** the polygonal prismatic surface is located in an elevated and intermediate position on the external troncoconical surface.

3. Implant according to claim 1 or 2, **characterised in that** the implantation section has a diameter greater than the troncoconical portion in its base, a flat support surface being formed for the prosthesis.

4. Implant according to any one of claims 1 to 3, **characterised in that** the said self-tapping screw has two sections, namely a distal section most distant from the receiving section, which has a cutting thread and extends in the form of a progressive conical spiral, and a second proximal section, closest to the receiving section, which has a non-cutting trapezoidal thread and extends in the form of a cylindrical spiral.

5. Dental prosthesis assembly comprising a dental implant according to any one of claims 1 to 4, a temporary or permanent dental prosthesis (10) capable of being put onto the troncoconical surface (4) of the dental implant and a retaining screw (11) to be received in the axial orifice (3).

## Patentansprüche

1. Zahnimplantat des Typs, der aus einem einzigen festen Körper gebildet ist, aufweisend einen Implantationsabschnitt, der zum Einführen in den Oberkieferknochen bestimmt und mit einer selbstschneidenden Schraube versehen ist, und einen Aufnahmeabschnitt, der eine kegelstumpfförmige Oberfläche (4) aufweist, die zur direkten Aufnahme einer temporären oder permanenten Zahnprothese (10) bestimmt ist, wobei sich die kegelstumpfförmige Oberfläche in einem kegelstumpfförmigen Teilbereich über dem Implantationsabschnitt befindet, wobei das Implantat außerdem einen axialen Durchlass (3) mit einem Gewinde (6) zur Aufnahme einer Halteschraube (11) aufweist, wobei der axiale Durchlass im oberen Teil des kegelstumpfförmigen Teilbereichs angeordnet ist ebenso wie eine polygonale prismatische Oberfläche (51'), die zum Festziehen des Implantats für seine Implantation in den Knochen bestimmt ist, **dadurch gekennzeichnet, dass** die kegelstumpfförmige Oberfläche unmittelbar benachbart zu dem Implantationsabschnitt ist, ohne dass die polygonale prismatische Oberfläche dazwischenliegt, und dadurch, dass die polygonale prismatische Oberfläche in einen Abschnitt der kegelstumpfförmigen Oberfläche integriert ist, wobei die polygonale prismatische Oberfläche einen Durchmesser aufweist, der gleich oder kleiner als der Mindestdurchmesser des Kegels an dem Abschnitt der kegelstumpfförmigen Oberfläche ist.

2. Implantat nach Anspruch 1, **dadurch gekennzeichnet, dass** die polygonale prismatische Oberfläche sich in einer erhöhten und zwischenliegenden Position auf der äußeren kegelstumpfförmigen Oberfläche befindet.

3. Implantat nach Anspruch 1 oder 2, **dadurch gekennzeichnet, dass** der Implantationsabschnitt einen Durchmesser aufweist, der größer ist als der kegelstumpfförmige Teilbereich in seiner Basis, wobei eine ebene Stützfläche für die Prothese gebildet ist.

4. Implantat nach einem der Ansprüche 1 bis 3, **dadurch gekennzeichnet, dass** die selbstschneidende Schraube zwei Abschnitte aufweist, nämlich einen distalen Abschnitt, der am weitesten von dem Aufnahmeabschnitt entfernt ist, der ein Schneidgewinde aufweist und sich in Form einer progressiv konischen Spirale erstreckt, und einen zweiten proximalen Abschnitt, der dem Aufnahmeabschnitt am nächsten liegt, der ein nicht schneidendes trapezartiges Gewinde aufweist und sich in Form einer zylindrischen Spirale erstreckt.

5. Zahnprothesenanordnung, umfassend ein Zahnimplantat nach einem der Ansprüche 1 bis 4, eine temporäre oder permanente Zahnprothese (10), die auf die kegelstumpfförmige Oberfläche (4) des Zahnimplantats aufsetzbar ist, und eine Halteschraube (11), die in dem axialen Durchlass (3) aufzunehmen ist.

## Revendications

1. Implant dentaire du type formé par un corps solide unique, ayant un tronçon d'implantation destiné à l'introduction dans l'os maxillaire et muni d'une vis auto-taraudante, et un tronçon de réception qui comprend une surface tronconique (4) destinée à recevoir directement une prothèse dentaire (10) temporaire ou permanente, la surface tronconique étant située dans une portion tronconique au-dessus du tronçon d'implantation, ledit implant ayant également un orifice axial (3) avec un filetage (6) pour recevoir une vis de retenue (11), l'orifice axial étant situé dans la partie supérieure de ladite portion tronconique, ainsi qu'une surface prismatique polygonale (51') destinée au serrage de l'implant pour son implantation dans l'os, **caractérisé en ce que** la surface tronconique est immédiatement adjacente au tronçon d'implantation, sans l'interposition de la surface prismatique polygonale, et **en ce que** la surface prismatique polygonale est intégrée dans un tronçon de la surface tronconique, ladite surface prismatique polygonale ayant un diamètre égal ou inférieur au diamètre minimum du cône dans ledit tronçon de surface tronconique.

2. Implant selon la revendication 1, **caractérisé en ce que** la surface prismatique polygonale est logée en une position élevée et intermédiaire sur la surface tronconique externe.

3. Implant selon la revendication 1 ou la revendication 2, **caractérisé en ce que** le tronçon d'implantation a un diamètre plus grand que la portion tronconique à sa base, une surface support plate étant formée pour la prothèse.

4. Implant selon l'une quelconque des revendications 1 à 3, **caractérisé en ce que** ladite vis auto-taraudante comprend deux tronçons, à savoir un tronçon distal le plus distant vis-à-vis du tronçon de réception, qui comprend un filet coupant et qui s'étend sous la forme d'une spirale conique progressive, et un second tronçon proximal, le plus proche du tronçon de réception, qui comprend un filet trapézoïdal non-coupant et qui s'étend sous la forme d'une spirale cylindrique.

5. Ensemble prothétique dentaire comprenant un implant dentaire selon l'une quelconque des revendications 1 à 4, une prothèse dentaire (10) temporaire ou permanente capable d'être mise sur la surface tronconique (4) de l'implant dentaire, et une vis de retenue (11) devant être reçue dans l'orifice axial (3).
